# EUROPEAN PATENT APPLICATION

(11) **EP 3 451 260 A1**
(43) Date of publication of application: **06.03.2019**
(21) Application number: 18202107.1
(22) Date of filing: 02.09.2016
(51) Int. Cl.: G06Q 10/10

(54) **ELECTRONIC APPARATUS AND OPERATING METHOD THEREOF**

(30) Priority: 14.09.2015 KR 20150129938
(62) Divisional of application: 16187026.6
(71) Applicant: Samsung Electronics Co., Ltd., Gyeonggi-do 16677 (KR)
(72) Inventor: LEE, Kyungjun, Gyeonggi-do (KR); KO, Jeong-Won, Seoul (KR); KWON, Giang Yoon, Seoul (KR); CHOI, Kyuhyung, Seoul (KR); LEE, Hyunyeul, Seoul (KR)
(74) Representative: HGF Limited

(57) **Abstract**

An apparatus and a method for displaying a screen are provided. The method includes providing a message on the screen, and displaying a schedule card on the screen based on the message. The electronic apparatus includes a display unit and a processor functionally connected with the display unit. The processor displays a screen including a message and displays a schedule card on the screen based on the message.

## Description

### TECHNICAL FIELD

The present disclosure relates to an electronic apparatus and an operating method thereof.

### BACKGROUND

Typically, an electronic device performs various functions in combination. For example, the electronic device can execute a mobile communication function, a data communication function, a schedule management function, and so on. Such an electronic device can fulfill a function by running an application of the function.

However, the electronic device should register a schedule by running a schedule management application. As a result, an ongoing application or communication is interrupted, which deteriorates user convenience.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an apparatus and method for displaying a screen.

In accordance with an aspect of the present disclosure, an operating method of an electronic apparatus is provided. The method includes displaying a screen comprising a message, and displaying a schedule card on the screen based on the message.

In accordance with another aspect of the present disclosure, an electronic apparatus is provided. The electronic apparatus includes a display unit, and a control unit or processor functionally connected with the display unit. The processor is configured to display a screen comprising a message and display a schedule card on the screen based on the message.

Other aspects, advantages, and salient features of the present disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of various embodiments of the present disclosure will be more apparent from the following description taken in conjunction with the accompanying drawings, in which:
FIG. 1 is a block diagram of an electronic apparatus according to various embodiments of the present disclosure;
FIG. 2 is a diagram of a message screen of an electronic apparatus according to various embodiments of the present disclosure;
FIG. 3 is a flowchart of an operating method of an electronic apparatus according to various embodiments of the present disclosure;
FIG. 4 is a flowchart of a method for displaying a message screen illustrated in FIG. 3 according to various embodiments of the present disclosure;
FIGS. 5A and 5B are flowcharts of a method for creating or changing a schedule card displayed on a message screen illustrated in FIG. 3 according to various embodiments of the present disclosure;
FIGS. 6, 7, 8, 9, 10, 11, 12, 13, 14, 15, 16, 17, 18, 19, 20, 21 and 22 illustrate a schedule card displayed on a message screen according to various embodiments of the present disclosure;
FIG. 23 is a flowchart of a method for performing a corresponding function illustrated in FIG. 3 according to various embodiments of the present disclosure;
FIG. 24 is a diagram of corresponding function execution according to an embodiment of the present disclosure;
FIG. 25 is a flowchart of a method for executing a corresponding function in FIG. 3 according to an embodiment of the present disclosure;
FIGS. 26 and 27 illustrate a corresponding function execution according to various embodiments of the present disclosure; and
FIG. 28 is a flowchart of a method for executing a corresponding function in FIG. 3 according to various embodiments of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

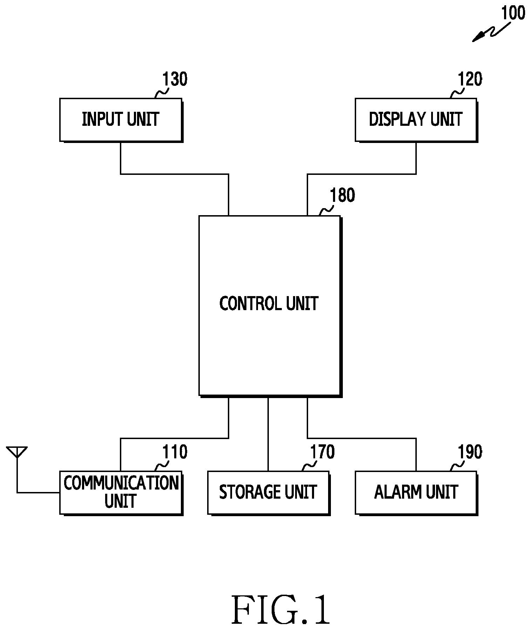

FIG. 1 is a block diagram of an electronic apparatus according to various embodiments of the present disclosure.

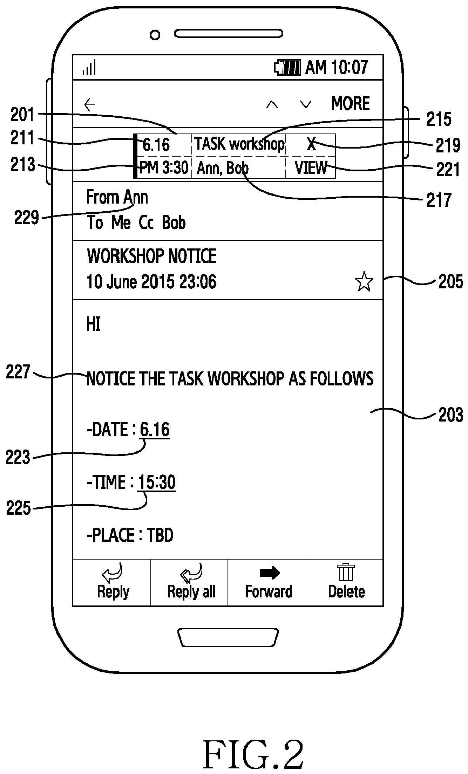

FIG. 2 is a diagram of a message screen of an electronic apparatus according to various embodiments of the present disclosure.

Referring to FIG. 1, the electronic apparatus 100 according to various embodiments includes a communication unit 110, a display unit 120, an input unit 130, a storage unit 170, a control unit 180, and an alarm unit 190.

The communication unit 110 processes communication in the electronic apparatus 100. The communication unit 110 can communicate with an external device (not shown) using various communication schemes. Herein, the communication unit 110 can conduct at least one of wireless communication and wired communication. For doing so, the communication unit 110 can access at least one of a mobile communication network and a data communication network. Alternatively, the communication unit 110 can perform short-range communication. For example, the external device can include an electronic device, a base station, a server, and a satellite. The communication schemes can include long term evolution (LTE), wideband code division multiple access (WCDMA), Global System for Mobile Communications (GSM), Wireless Fidelity (WiFi), Bluetooth (BT), and near field communications (NFC).

The display unit 120 outputs displaying data from the electronic apparatus 100. The display unit 120 can include a liquid crystal display (LCD), a light emitting diode (LED) display, an organic LED (OLED) display, a micro electro mechanical systems (MEMS) display, and an electronic paper display.

The input unit 130 generates input data in the electronic apparatus 100. In so doing, the input unit 130 can generate the input data in response to a user input of the electronic apparatus 100. The input unit 130 can include at least one input means. The input unit 130 can include a key pad, a dome switch, a physical button, a touch panel, a jog & shuttle, or a sensor. The input unit 130 can be combined with the display unit 120 and embodied as a touch screen.

The storage unit 170 stores operation programs of the electronic apparatus 100. In so doing, the storage unit 170 can store a plurality of functions. For example, the function can be an application. Herein, the functions can include a message transmission and reception function, a message writing function, or a schedule management function. The storage unit 170 can store a program for displaying and controlling a message screen. The storage unit 170 stores data generating during program executions. The storage unit 170 can store a message or a schedule.

As illustrated in FIG. 1, the control unit 180 controls operations in the electronic apparatus 100. The control unit 180 can perform a plurality of functions. Herein, the control unit 180 can include a function processor for each function. The function processor can substantially process each function. For example, the function processor can be an application processor (AP).

Referring to FIGS. 1 and 2, the control unit 180 is configured tocontrol displaying of a schedule card 201 on a message screen 205 through the input data generated by the input unit 130. Herein, the message screen 205 can include a message 203. The message 203 can include at least one of date and time information 223 and 225 and text information 227. The message 203 can be received according to the communication between the electronic apparatus 100 and the external device. Alternatively, the message 203 can be transmitted according to the communication between the electronic apparatus 100 and the external device. Alternatively, the message 203 can be stored in the storage unit 170. Alternatively, the message 203 can be created through the input unit 130. For example, the message 203 can include at least one of various applications including a call, a short message, a multimedia message, a social network service (SNS) message, an instant message, a memo, a webpage, or a text.

The control unit 180 is further configured to control creating of the schedule card 201 on the message screen 205 based on the message 203. The control unit 180 is configured to input a schedule into the schedule card 201 on the message screen 205 based on the message 203. The control unit 180 can change a schedule stored in the schedule card 201 on the message screen 205 based on the message 203.

As illustrated in FIG. 2, the schedule card 201 can be displayed in an area of the message screen 205. For example, as shown in FIG. 2, the schedule card 201 can be displayed on the top of the message screen 205. That is, the schedule card 201 can be displayed, but not limited to, above the message 203 while not overlapping the message 203. The schedule card 201 can be displayed together with the message 203 in various areas on the message screen 205. The message screen 205 can be realized in a polygonal shape, for example, in a quadrangular shape. The message screen 205 may be realized in a circle.

The schedule card 201 can display a schedule such as a date, a time, a title, a counterpart, or a place. The schedule card 201 is an area for receiving a schedule. The schedule card 201 is an area for changing a pre-input schedule. The schedule card 201 is an area for reading a stored schedule. The schedule card 201 can display a summary of a corresponding schedule. For example, the schedule card 201 can include at least one of a date display area 211, a time display area 213, a title display area 215, a counterpart display area 217, and a place display area (not shown). The date display area 211 can display a date of a corresponding schedule. The time display area 213 can display a time of a corresponding schedule. The title display area 215 can display a title or a detail of a corresponding schedule. The counterpart display area 217 can display counterpart identification information. The place display area can display a place of a corresponding schedule. While the schedule card 201 includes the date display area 211, the time display area 213, the title display area 215, and the counterpart display area 217 in the drawing, the present disclosure is not limited to those areas. The schedule card 201 may further include the place display area, or may include the place display area in place of at least one of the date display area 211, the time display area 213, the title display area 215, and the counterpart display area 217.

The schedule card 201 can further include a close button 219 and an OK button 221, as illustrated in FIG. 2. When the close button 219 is selected, the control unit 180 can stop displaying the schedule card 201 and remove the schedule card 201 from the message screen 205. When the OK button 221 is selected, the control unit 180 can fetch a schedule calendar. The schedule calendar can display a preset time duration based on a date displayed in the schedule card 201. For example, the schedule calendar can display a calendar and stored schedules between three days before and after the date displayed in the schedule card 201. The schedule calendar can be displayed with the message 203 and the schedule card 201 on the message screen 205. The OK button 221 can be displayed within the pre-stored schedule card 201. When creating or changing the schedule card 201, the OK button 221 can be replaced with a save button. When the save button is selected, the control unit 180 can store the schedule card 201.

When storing the schedule card 201, the control unit 180 can register a corresponding schedule in the schedule management application. Accordingly, a schedule can be registered without having to register the schedule directly through the schedule management application. That is, even when an application is running, a schedule can be easily registered through the schedule card 201 without having to closing the running application.

The control unit 180 can share a schedule corresponding to the schedule card 201 using counterpart identification information 229. The control unit 180 can set a remind function for the stored schedule card 201 and execute a remind.

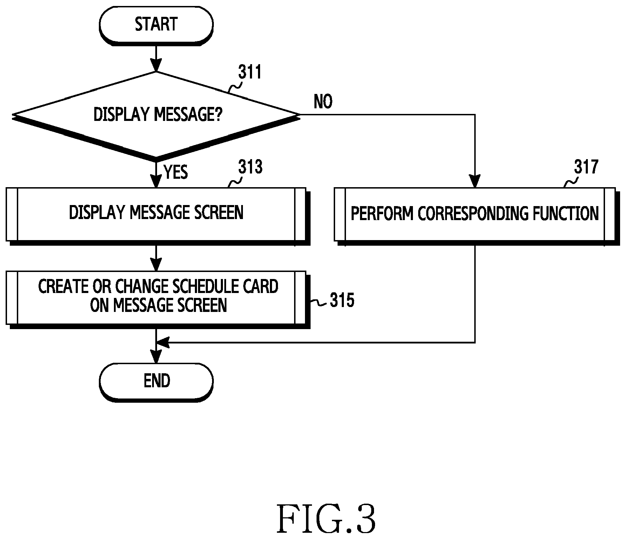

FIG. 3 is a flowchart of an operating method of an electronic apparatus according to various embodiments of the present disclosure.

Referring to FIGS. 1, 2 and 3, the control unit 180 detects a request to display the message 203 in operation 311. When a user input displays the stored message 203 or creates the message 203 to send through the input unit 130, the control unit 180 can detect a request to display the message 203. Alternatively, when receiving the message 203 through the communication unit 110, the control unit 180 can detect a request to display the message 203.

In operation 313, illustrated in FIG. 3, the control unit 180 can display the message screen 205. The message screen 205 can include the message 203. The message 203 can include at least one of the date and time information 223 and 225 and the text information 227. The control unit 180 can determine the date and time information 223 and 225 including numbers by analyzing the message 203. The control unit 180 can detect the date and time information 223 and 225 which can be parsed in the message 203. The control unit 180 can underline the date information 223 and the time information 225. Alternatively, the control unit 180 may display the date and time information 223 and 225 in a different color from the text information 227, or highlight the date and time information 223 and 225. When the message 203 is not being displayed, the control unit 180 can perform a corresponding function in operation 317. After operation 313, the control unit 180 can be executed to create or change the schedule card 201 on the message screen 205 in operation 315.

The message 203 can be received according to the communication between the electronic apparatus 100 and the external device. Alternatively, the message 203 can be transmitted according to the communication between the electronic apparatus 100 and the external device. Alternatively, the message 203 can be stored through the storage unit 170. Alternatively, the message 203 can be created through the input unit 130.

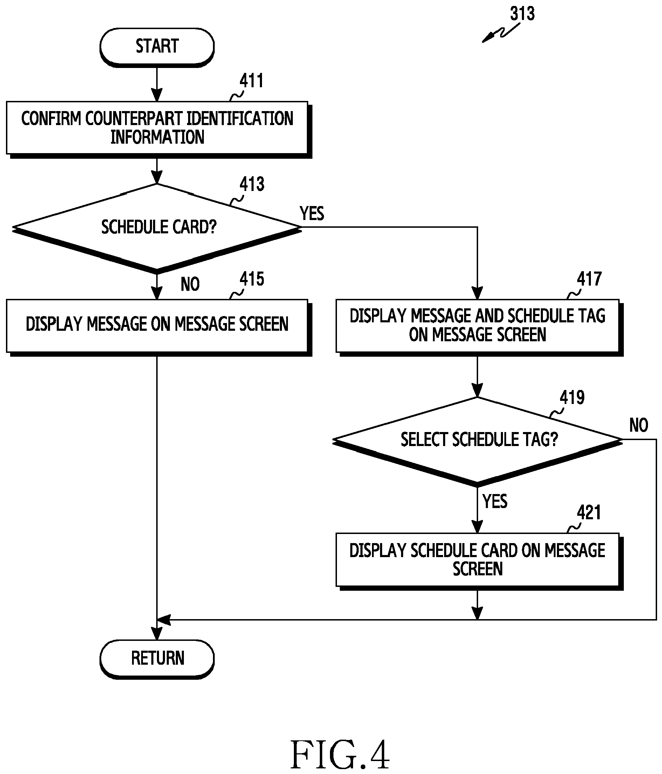

FIG. 4 is a flowchart of a method for displaying the message screen 205 illustrated in FIG. 3 according to various embodiments of the present disclosure.

Referring to FIG. 4, the control unit 180 confirms the counterpart identification information 229 of the message 203 in operation 411. The counterpart identification information 229 can include at least one of a message sender, a message recipient, and a message carbon copy (CC). The counterpart identification information 229 can be confirmed by determining whether the counterpart is included in a contact list stored in the storage unit 170. In operation 413, the control unit 180 determines whether there is a pre-stored schedule card 201 corresponding to the counterpart identification information 229 of the message 203.

When there is no pre-stored schedule card 201 corresponding to the counterpart identification information 229 in operation 413, the control unit 180 displays the message 203 on the message screen 205 in operation 415. At this time, the message 203 can include at least one of various applications including a call, a short message, a multimedia message, an SNS message, an instant message, a memo, a webpage, and a text. Next, the control unit 180 returns to FIG. 3.

When there is the pre-stored schedule card 201 corresponding to the counterpart identification information 229 in operation 413, the control unit 180 displays the message 203 and a schedule tag 801 on the message screen 205 in operation 417. The schedule tag 801 is a reduction of the schedule card 201 and can display only least information of the schedule card 201. For example, the schedule tag 801 can display only a schedule date. The schedule tag 801 can be displayed in a smaller size than the schedule card 201 on the message screen 205.

In operation 419, the control unit 180 detects whether the schedule tag 801 is selected. When detecting selection of the schedule tag 801, the control unit 180 displays the message 203 and the schedule card 201 on the message screen 205 in operation 421. That is, upon detecting the selection of the schedule tag 801, the control unit 180 can stop displaying the schedule tag 801 and display the schedule card 201. The schedule card 201 can display on the top of the message screen 205. Next, the control unit 180 returns to FIG. 3.

When not detecting the selection of the schedule tag 801, the control unit 180 displays the message 203 and the schedule tag 801 and returns to FIG. 3.

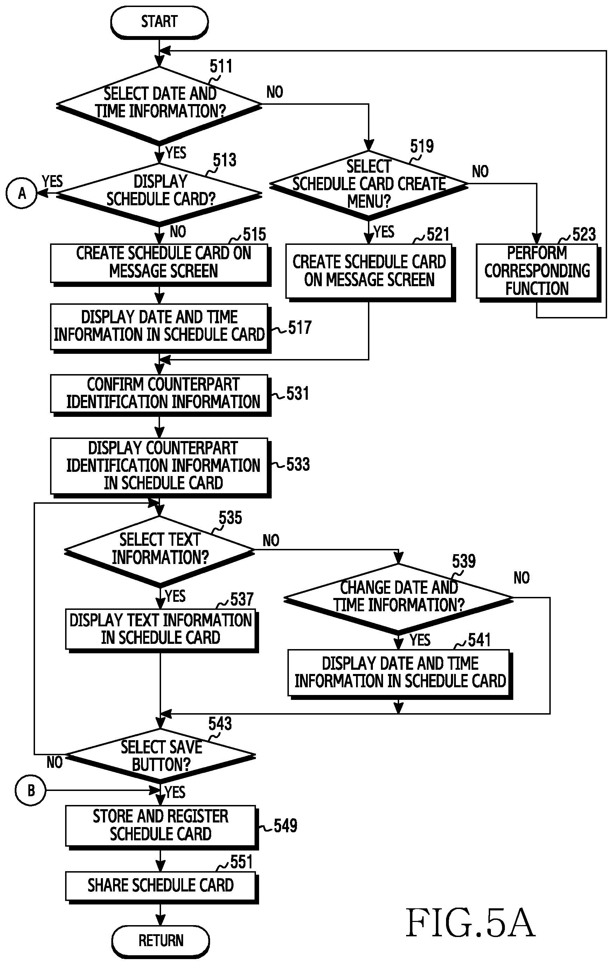

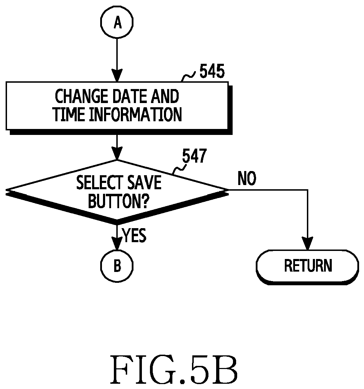

FIGS. 5A and 5B are flowcharts of a method for creating or changing a schedule card displayed on a message screen illustrated in FIG. 3 according to various embodiments of the present disclosure.

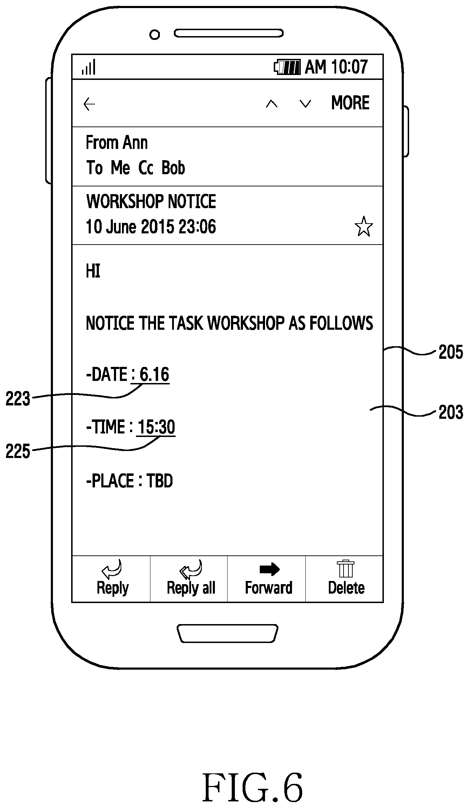

FIGS. 6, 7, 8, 9, 10, 11, 12, 13, 14, 15, 16, 17, 18, 19, 20, 21 and 22 illustrate a schedule card created or changed on a message screen according to various embodiments of the present disclosure.

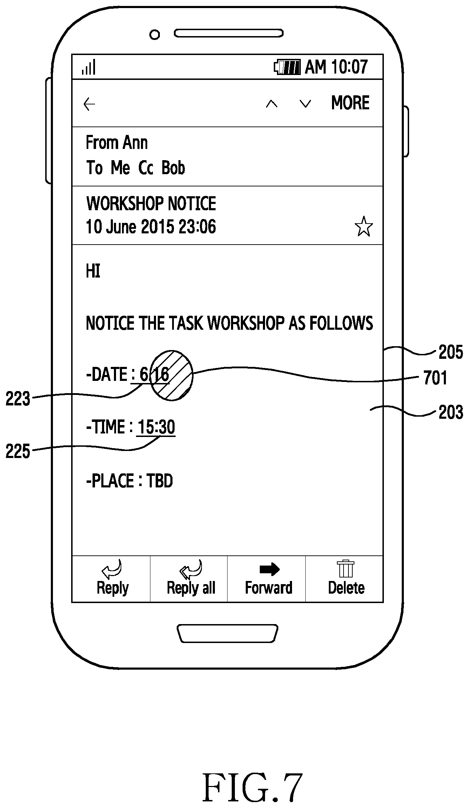

As illustrated in FIG. 5A, the control unit 180 detects whether the date and time information 223 and 225 is selected on the message screen 205 in operation 511. For example, the message 203 can be an e-mail received from 'Ann' as illustrated in FIG. 6. The control unit 180 can display the message 203 on the message screen 205. The control unit 180 can detect selection 701 of '6.16' being the date information 223 as illustrated in FIG. 7. In so doing, the selection 701 can be made by various user gestures such as tap and drag. The control unit 180 can detect the selection 701 even on the time information 225.

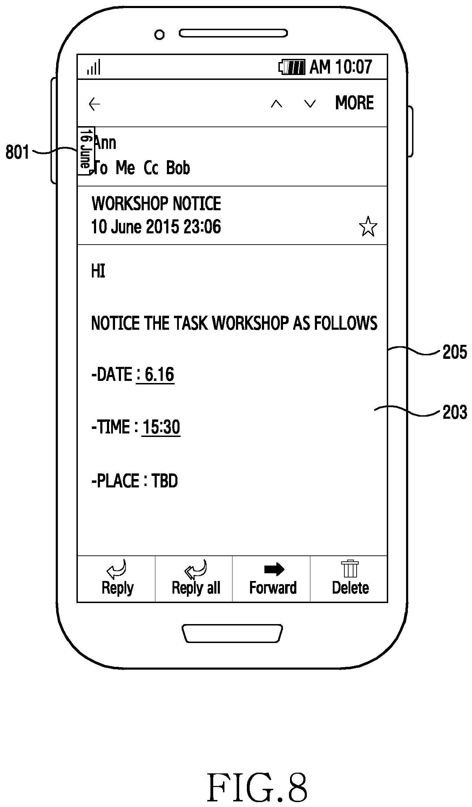

Upon detecting the selection of the date and time information 223 and 225, the control unit 180 determines whether the current message screen 205 displays the schedule card 201 in operation 513. For example, when there is no pre-stored schedule card 201 corresponding to 'Ann', the message screen 205 displays only the message 203 and accordingly the control unit 180 determines that the schedule card 201 is not displayed. By contrast, when there exists the pre-stored schedule card 201 corresponding to 'Ann', the control unit 180 displays the message 203 and the schedule tag 801 on the message screen 205 as illustrated in FIG. 8. In this case, when the schedule tag 801 is not selected, the control unit 180 determines that the schedule card 201 is not displayed. By contrast, when the schedule tag 801 is selected, the control unit 180 displays the schedule card 201 corresponding to the schedule tag 801 and accordingly determines that the schedule card 201 is displayed.

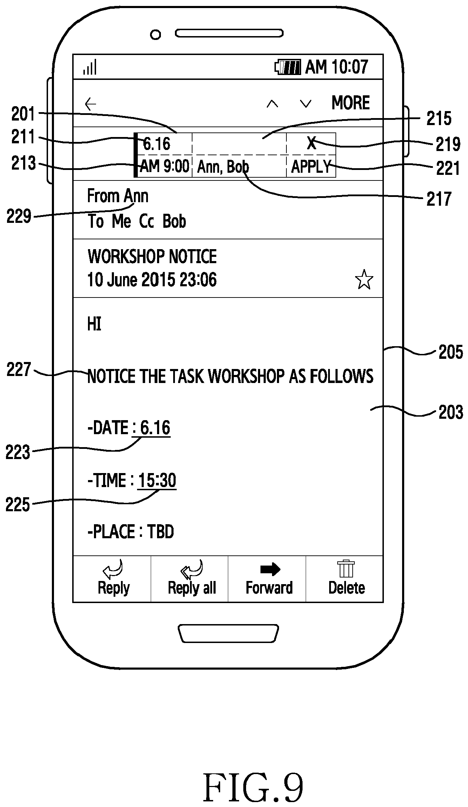

When the schedule card 201 is not displayed in operation 513, the control unit 180 can create a new schedule card 201 on the message screen 205 in operation 515. For example, the control unit 180 can create the schedule card 201 on the top of the message screen 205 as illustrated in FIG. 9. That is, the message screen 205 can display the schedule card 201 together with the message 203.

In operation 517, the control unit 180 can display a schedule in the schedule card 201. That is, the control unit 180 can display the date and time information 223 and 225 in the date display area 211 or the time display area 213 of the schedule card 201 according to operation 511. For example, the control unit 180 can display a corresponding date in the date display area 211 in response to the selection 701 of the date information 223 as illustrated in FIG. 9. That is, in response to the selection of the date information 223 '6.16' in the message, the control unit 180 can display the date '6.16' in the date display area 211. As such, a date format of the date displayed in the date display area 211 can differ from a date format corresponding to the selected date information 223. Alternatively, the date format of the date display area 211 can be the same as the date format of the selected date information 223. An unformatted date or time can be input to a particular area of the schedule card 201. That is, the control unit 180 can input a schedule into the schedule card 201 even through simple selection of the user. Meanwhile, since the time information 225 is not selected, the control unit 180 can display a default value in the time display area 213.

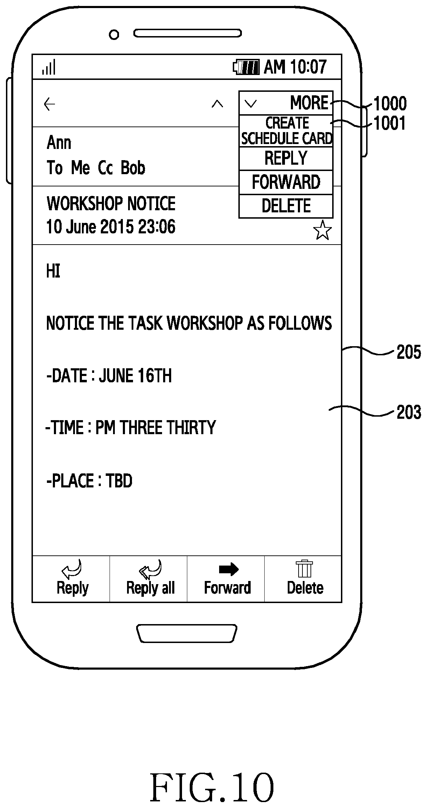

When the date and time information 223 and 225 is not selected in operation 511 (illustrated in FIG. 5A) the control unit 180 can detect whether a schedule card create menu 1001 (illustrated in FIG. 10) is selected in operation 519 (illustrated in FIG. 5A). When a menu display button 1000 (illustrated in FIG. 10) is selected, the control unit 180 displays the create schedule card create menu 1001 as illustrated in FIG. 10. When the schedule card create menu 1001 is selected in operation 521, the control unit 180 can create the schedule card 201. That is, the control unit 180 may create the schedule card 201 through the selection of the schedule card create menu 1001. When the date information and the time information do not include numbers as illustrated in FIG. 10, the control unit 180 can determine no selectable date and time information.

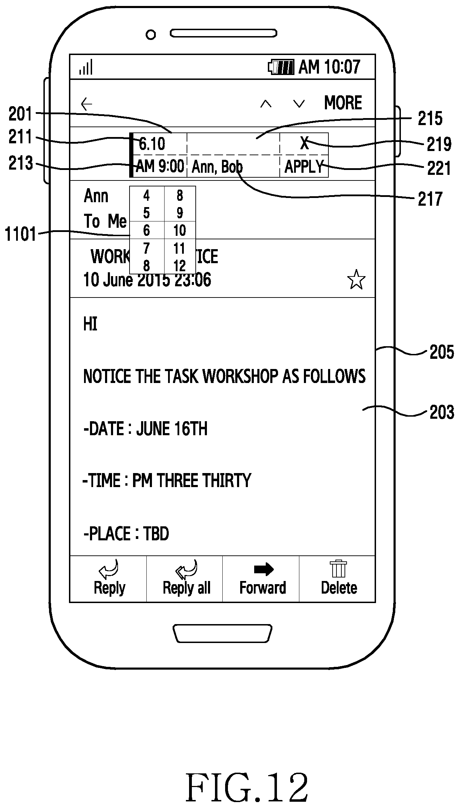

After creating the schedule card 201, the control unit 180 can input a date in the date display area 211 of the schedule card 201 as illustrated in FIG. 12. That is, when the date display area 211 is selected, the control unit 180 can display a date select screen 1101 for selecting a date. When a date is selected in the date select screen 1101, the control unit 180 can change the date of the schedule card 201 with the input date.

When the schedule card create menu 1001 is not selected in operation 519, the control unit 180 can perform a corresponding function in operation 523. In so doing, the control unit 180 can reply to, forward, or delete the message. Alternatively, the control unit 180 can execute another application or display another screen.

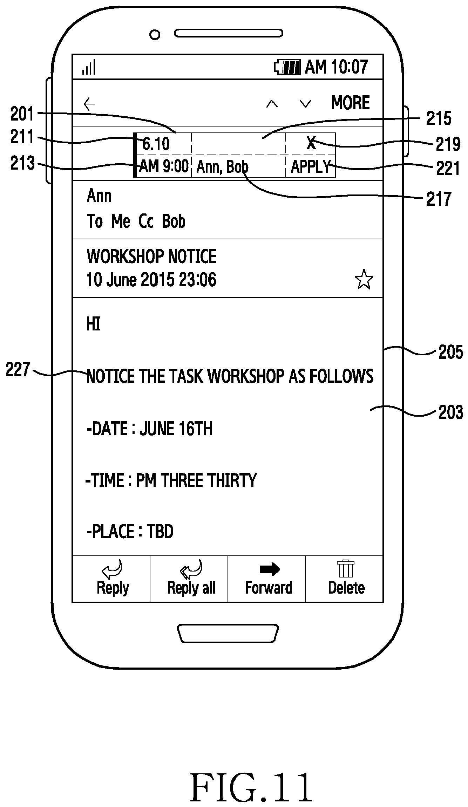

In operation 531, the control unit 180 can confirm the counterpart identification information 229. The control unit 180 can identify a message sender 'Ann' and a message CC 'Bob' as illustrated in FIG. 11. Hence, in operation 533, the control unit 180 can display the counterpart identification information 229 'Ann' and 'Bob' in the counterpart display area 217 of the schedule card 201. Meanwhile, in the flowcharts of FIG. 5A and FIG. 5B, after the schedule card 201 is created, the control unit 180 displays, but not limited to, the date and time information 223 and 225 in the schedule card 201 and the counterpart identification information 229. As creating the schedule card 201, the control unit 180 can display the selected date and time information 223 and 225 and the counterpart identification information 229 at the same time in the schedule card 201.

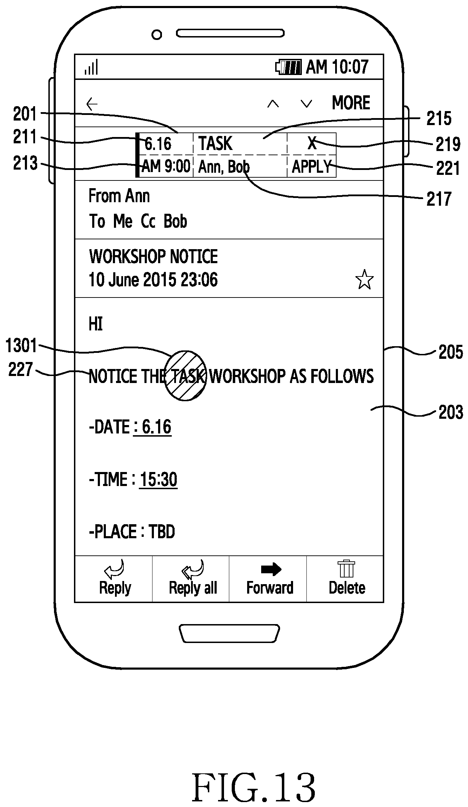

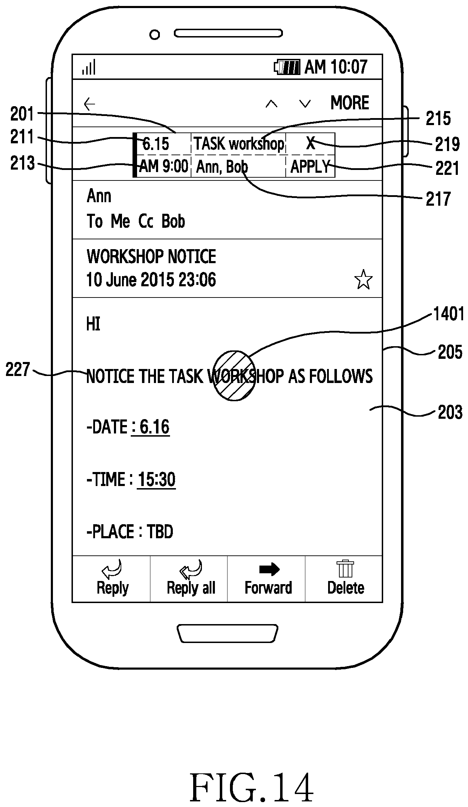

In operation 535, the control unit 180 can detect whether the text information 227 is selected. When the text information 227 is selected 1301, in operation 537, the control unit 180 can display the text information 227 in the title display area 215 of the schedule card 201 as illustrated in FIG. 13. The control unit 180 can input the text information 227 selected 1301 on the message screen 205 into the title display area 215 on a word basis. For example, when a text 'task is selected 1301, the control unit 180 can display the text 'task' in the title display area 215. After the text 'task' is displayed, when a text 'workshop' is selected 1401, the control unit 180 can display the text 'workshop' following the text 'task' in the title display area 215 as illustrated in FIG. 14. That is, according to the text selection order on the message screen 205, the control unit 180 can display the texts sequentially in the title display area 215 of the schedule card 201. When the texts 'task' and 'workshop' are selected once by a user's drag gesture, the control unit 180 may display the texts 'task' and 'workshop' together in the title display area 215. As such, the schedule can be easily input without using a keyboard. That is, the schedule can be registered easily and quickly.

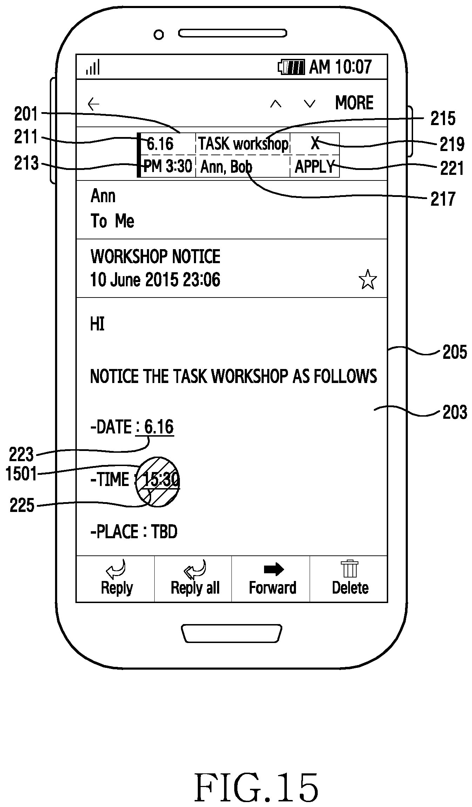

When the text information is not selected in operation 535, the control unit 180 can detect whether the date and time information 223 and 225 is requested to change in operation 539. The change request of the date and time information 223 and 225 can be determined by detecting selection 1501 of the date and time information 223 and 225 as illustrated in FIG. 15. That is, when the date and time information 223 and 225 is parsed and selected as illustrated in FIG. 15, the control unit 180 can detect the change request of the date and time information 223 and 225 of the schedule card 201. Next, when detecting the change request of the date and time information 223 and 225 in operation 539, the control unit 180 can display the changed date and time information 223 and 225 in the schedule card 201 in operation 541. For example, when the time information 225 '15:30' is selected on the message screen 205, the control unit 180 can display 'PM 3:30' in the time display area 213 of the schedule card 201. That is, the control unit 180 can change a default value displayed in the time display area 213 when the schedule card 201 generated, with 'PM 3:30'. A time format of the time displayed in the time display area 213 can differ from a time format corresponding to the selected time information 225. Alternatively, the time format of the time display area 213 can be the same as the time format corresponding to the selected time information 225.

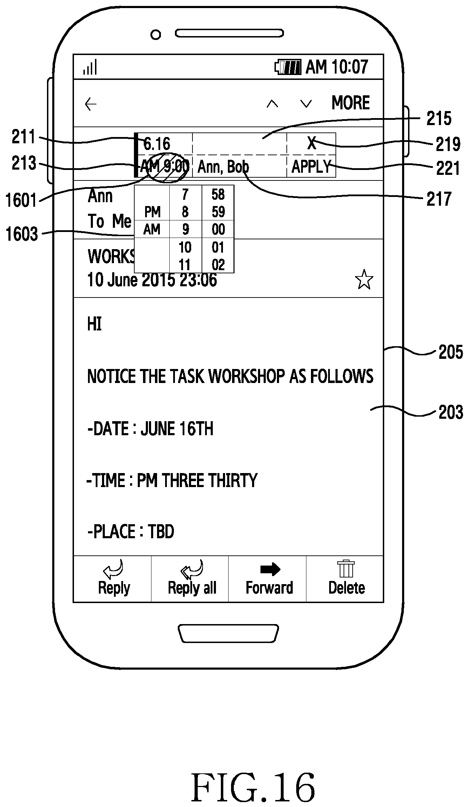

When the date and time information includes unparsed information, the control unit 180 can determine whether the date and time information is changed by receiving selection of the time display area 213 of the schedule card 201 as illustrated in FIG. 16. That is, when the time display area 213 is selected 1601, the control unit 180 can determine that the date and time information is changed and display a time select screen 1603 for selecting time. Next, the control unit 180 can display date and time information input through the time select screen 1603, in the schedule card 201 in operation 541.

In operation 543, the control unit 180 can detect whether the save button 221 is selected. When the save button 221 is not selected in operation 543, the control unit 180 can detect whether the text information 227 of the message screen 205 is selected, back in operation 535.

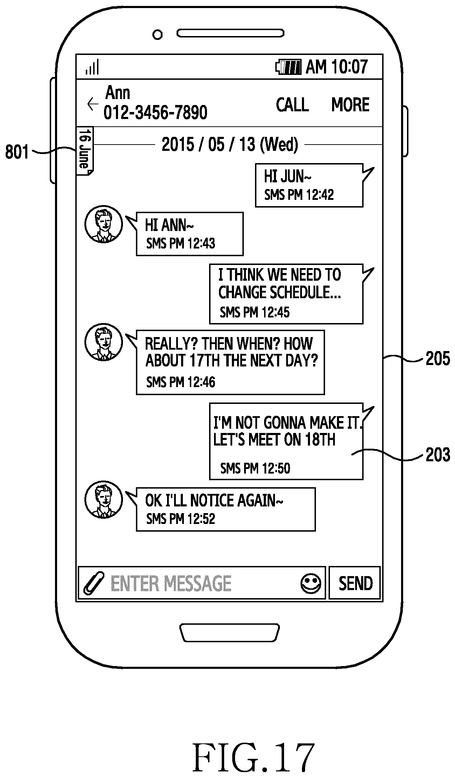

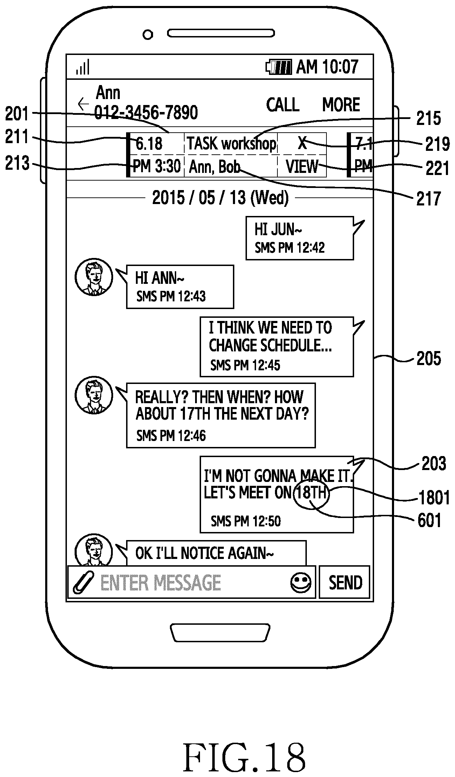

When detecting the selection of the date and time information 223 and 225 in operation 511 and displaying the schedule card 201 in operation 513, the control unit 180 can change the date and time displayed in the schedule card 201 in operation 545. For example, when pre-storing the schedule card 201 with the other part 'Ann', the control unit 180 displays the message 203 and the schedule tag 801 on the message screen 205 as illustrated in FIG. 17. When the schedule tag 801 is selected, the control unit 180 can display the schedule card 201 as illustrated in FIG. 18. Next, when the pre-stored schedule card 201 is displayed and date and time information 601 '18' is selected 1801, the control unit 180 change the date of the date display area 211 of the pre-stored schedule card 201.

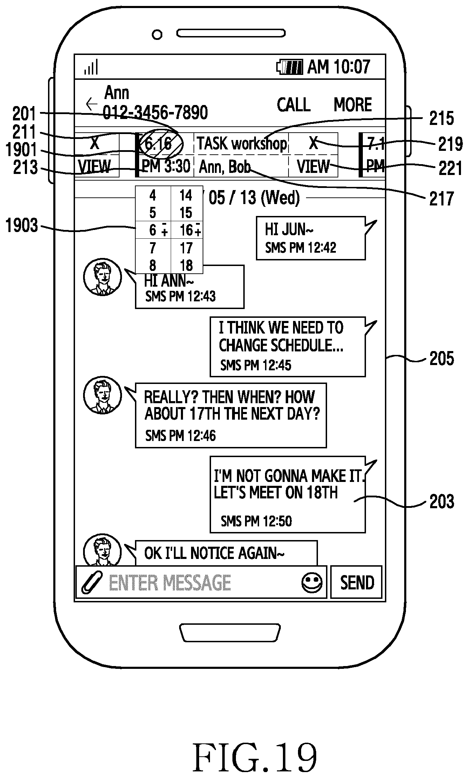

The date and time information can be changed on a date and time information select screen 1903 as illustrated in FIG. 19. That is, when the date display area 211 or the time display area 213 is selected in the pre-stored schedule card 201, the control unit 180 can display the date and time information select screen 1903, receive date and time information selection on the date and time information select screen 1903, and thus change the schedule of the schedule card 201. For example, as illustrated in FIG. 19, when the date display area 211 is selected 1901, the control unit 180 can display the date information select screen 1903, receive date information selection on the date information select screen 1903, and thus change the date of the schedule card 201.

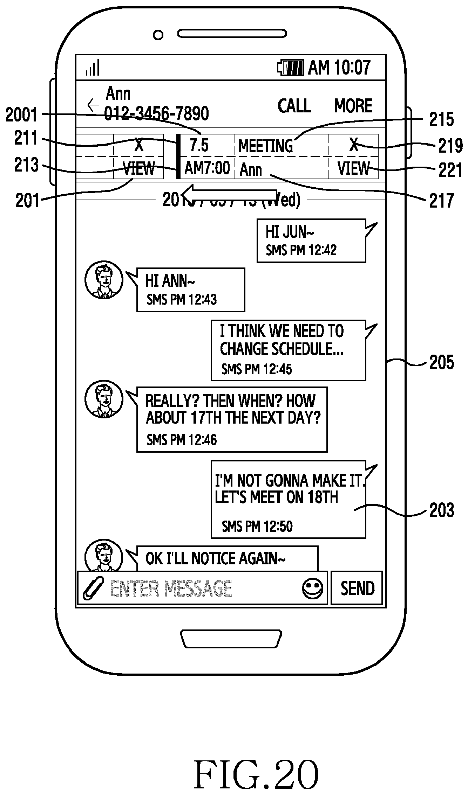

When pre-storing a plurality of the schedule cards 201 with 'Ann', the control unit 180 can display a schedule corresponding to the latest schedule chard 201 as the schedule tag 801. When the schedule tag 801 is selected, the control unit 180 can show the plurality of the pre-stored schedule cards 201 by displaying the whole latest schedule card 201 and part of the next schedule card 2001. As illustrated in FIG. 20, the schedule cards 201 and 2001 can move horizontally based on a user gesture. For example, the schedule cards 201 and 2001 can move horizontally upon receiving a user's horizontal swipe action. When one of the schedule cards 201 and 2001 is selected, the control unit 180 can change the schedule of the selected schedule card 201.

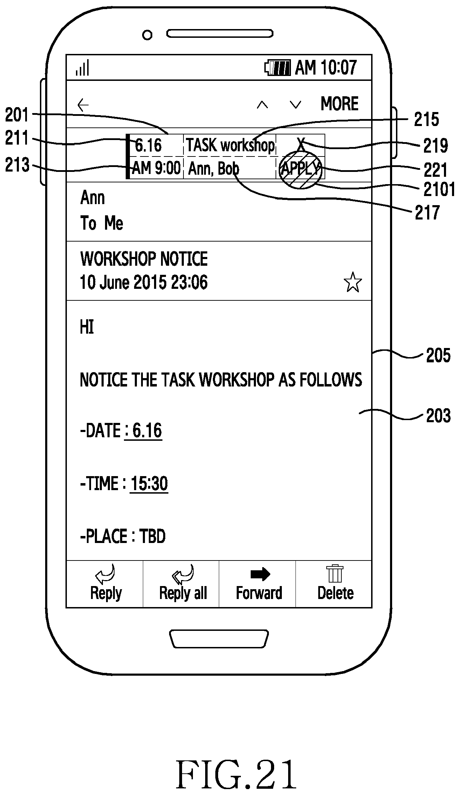

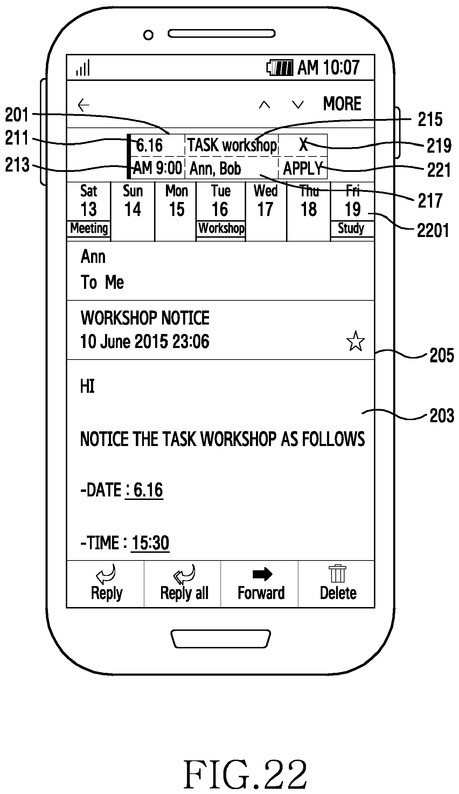

In operation 547, illustrated in FIG. 5B, the control unit 180 can detect whether the save button 221 of the schedule card 201 of the changed date and time information is selected. When the save button 221 is not selected in operation 543, the control unit 180 can return to operation 511. When the save button 221 is selected, the control unit 180 can store and register the schedule card 201 in operation 549. That is, when the save button 221 is selected 2101 in the schedule card 201 as illustrated in FIG. 21, the control unit 180 can store the schedule card 210 and register the schedule in the schedule management application. After detecting the selection 2101 of the save button 221, the control unit 180 can display a schedule calendar 2201 below the schedule card 201 as illustrated in FIG. 22. The schedule calendar 2201 can display a preset time duration based on the date displayed in the schedule card 201. For example, the schedule calendar 2201 can display a calendar and stored schedules between three days before and after the date displayed in the schedule card 201. The control unit 180 can display the schedule calendar 2201 just for a short time. For example, when the save button 221 is selected, the control unit 180 can display the schedule calendar 2201 just for several seconds and then stop displaying it.

When detecting a user gesture input in the schedule card 201 or the schedule calendar 2201, the control unit 180 can execute the schedule management application. For example, when detecting a long touch in the schedule card 201 or the schedule calendar, the control unit 180 can execute the schedule management application. The control unit 180 can input additional details in the schedule management application.

Even when the user conducts real-time communication using the message 203, he/she can register a schedule in the schedule card 201 without interrupting the communication. That is, during the communication, the user can register a schedule in real time without switching the application to the schedule management application.

In operation 551, illustrated in FIG. 5A, the control unit 180 can share the schedule card 201. When a new schedule is registered, the control unit 180 can send a message requesting to create the schedule card 201 using the counterpart identification information 229 or send a message about the schedule through the communication unit 110. Alternatively, the control unit 180 can request to automatically register the schedule card 201 in an electronic device corresponding to the counterpart identification information 229. When the schedule card 201 is created on the message screen 205, the control unit 180 can share the schedule card 201 using a message of the same type as the message 203 displayed on the message screen 205. For example, when the displayed message 203 is an email and the schedule card 201 is created on the message screen 205, the control unit 180 can send an email requesting to create the schedule card 201 using the counterpart identification information 229 or send an email about the schedule through the communication unit 110.

When the pre-stored schedule is changed, the control unit 180 can send a message requesting to change the schedule card 201 using the counterpart identification information 229 or send a message about the changed schedule through the communication unit 110. Alternatively, the control unit 180 can request to change the schedule card 201 in the electronic device corresponding to the counterpart identification information 229. Thus, the schedule card 201 or the schedule corresponding to the schedule card 201 can be shared using the counterpart identification information 229.

When the schedule is registered, the schedule can be sharing using the counterpart identification information 229 and thus the schedule management is facilitated.

Meanwhile, when not displaying the message 203 in operation 311 of FIG. 3, the control unit 180 can perform a corresponding function in operation 317.

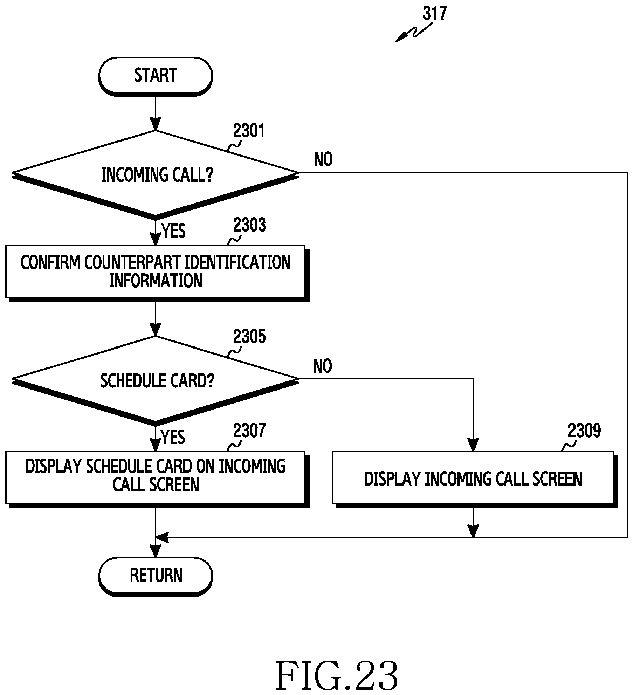

FIG. 23 is a flowchart of a method for performing the corresponding function in FIG. 3 according to an embodiment of the present disclosure.

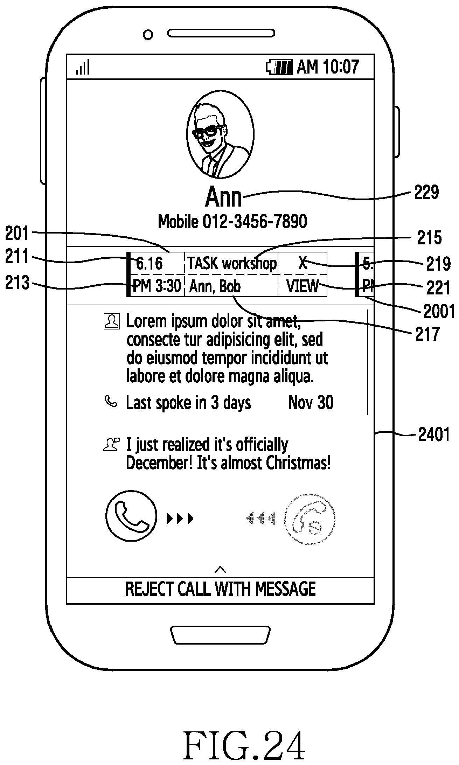

FIG. 24 depicts the corresponding function execution according to an embodiment of the present disclosure.

Referring to FIG. 23, the control unit 180 detects an incoming call in operation 2301. The control unit 180 can detect an incoming call or an outgoing call through the communication unit 110.

When detecting the incoming call or the outgoing call, the control unit 180 can confirm the counterpart identification information 229 in operation 2303. That is, the control unit 180 can confirm the counterpart identification information 229 of the incoming call or the outgoing call. The counterpart identification information 229 can be confirmed by determining whether it is included in the contact list stored in the storage unit 170.

In operation 2305, the control unit 180 determines whether there exists the schedule card 201 corresponding to the counterpart identification information 229.

When determining the schedule card 201 corresponding to the counterpart identification information 229, the control unit 180 displays the schedule card 201 on an incoming call screen 2401 in operation 2307. For example, as illustrated in FIG. 24, when the counterpart identification information 229 of the incoming call is 'Ann' and the schedule cards 201 and 2001 are stored with 'Ann', the control unit 180 displays the schedule cards 201 and 2001 on the incoming call screen 2401. When the plurality of the schedule cards 201 and 2001 is pre-stored with 'Ann', the control unit 180 can display the latest schedule card 201 based on the current day. The control unit 180 can display the whole latest schedule card 201 and part of the next schedule card 2001.

The present disclosure is not limited to those embodiments, and the corresponding function execution can include call originating. When originating a call, the control unit 180 may confirm the counterpart identification information 229 and, when detecting the schedule card 201, display the schedule card 201 on an outgoing call screen.

When there is no schedule card 201 corresponding to the counterpart identification information 229, the control unit 180 displays the incoming call screen alone in operation 2309. Next, the control unit 180 returns to FIG. 3. When not detecting the incoming call in operation 2301, the control unit 180 returns to FIG. 3.

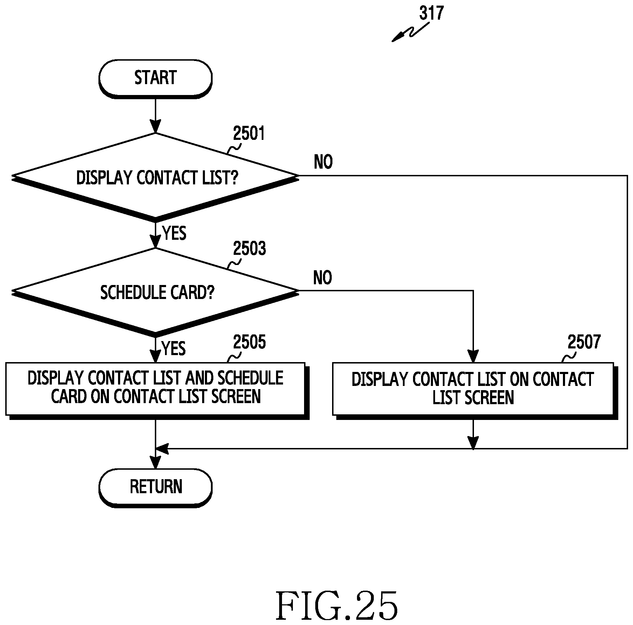

FIG. 25 is a flowchart of a method for executing a corresponding function in FIG. 3 according to an embodiment of the present disclosure.

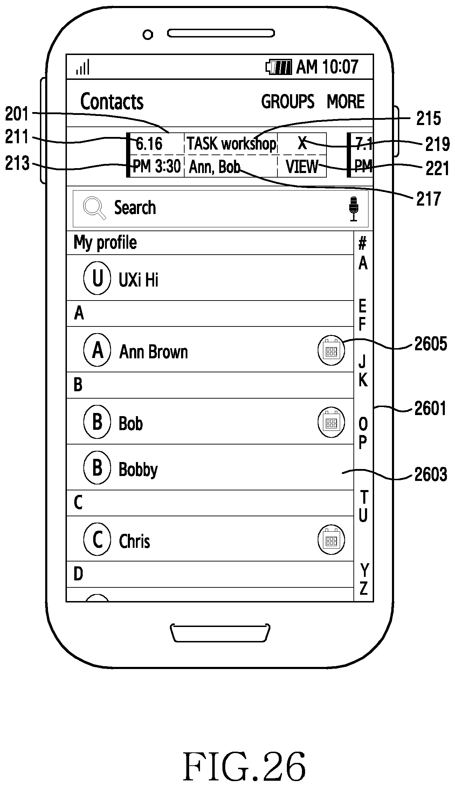

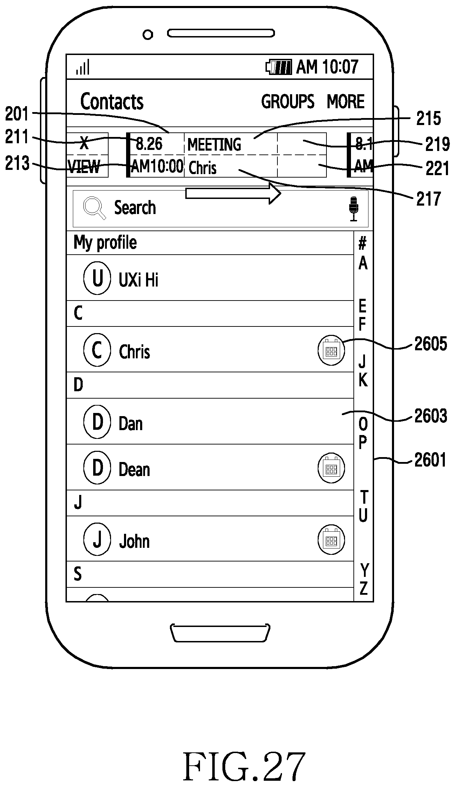

FIGS. 26 and 27 illustrate a corresponding function execution according to an embodiment of the present disclosure.

As illustrated in FIG. 25, the control unit 180 detects a display request for a contact list 2603 in operation 2501.

When detecting the display request for the contact list 2603, the control unit 180 determines whether there are the schedule cards 201 and 2001 in operation 2503. That is, the control unit 180 determines whether there are the schedule cards 201 and 2001 stored for a contact of the contact list 2603.

When determining the schedule cards 201 and 2001, the control unit 180 displays the contact list 2603 and the schedule cards 201 and 2001 on a contact list screen 2601 in operation 2505. For example, as illustrated in FIG. 26, the control unit 180 can display the schedule cards 201 and 2001 in an area of the contact list screen 2601. The control unit 180 can display the schedule cards 201 and 2001 on the top of the contact list screen 2601. That is, the control unit 180 can display the schedule cards 201 and 2001 on, but not limited to, the top of the contact list screen 2601 not to overlap. The control unit 180 can display the schedule cards 201 and 2001 together with the contact list 2603 in various areas on the contact list screen 2601.

When there are the schedule cards 201 and 2001 stored for the contact in the contact list 2603, the control unit 180 can display an icon 2605 on the corresponding contact. For example, the control unit 180 can display a calendar-shaped icon 2605 on the corresponding contact. Thus, the presence of the schedule card 201 stored for the corresponding contact can be indicated.

When the plurality of the schedule cards 201 is stored, the control unit 180 can show the plurality of the stored schedule cards 201 by displaying the whole latest schedule card 201 and part of the next schedule card 2001. The schedule cards 201 and 2001 can move horizontally based on a user gesture. For example, the schedule cards 201 and 2001 can move horizontally upon receiving a user's horizontal swipe action. The control unit 180 can sequentially display the schedule cards 201 and 2001 from the latest schedule date.

When the displayed contact list 2603 changes based on the user input on the contact list screen 2601, the displayed schedule cards 201 and 2001 can also change. For example, when receiving a swipe from the bottom to the top or from the top to the bottom on the contact list screen 2601, the displayed contact list 2603 can change and the schedule card 201 with the contact displayed at the top of the contact list 2603 can be displayed. For example, as illustrated in FIG. 27, when a swipe from the bottom to the top is input on the contact list screen 2601, a contact displayed at the top of the contact list 2603 is 'Chris', and the schedule cards 201 and 2001 are stored with 'Chris', the schedule cards 201 and 2001 with 'Chris' can be displayed on the top of the contact list screen 2601. When the plurality of the schedule cards 201 is stored with 'Chris', the whole latest schedule card 201 and part of the next schedule card 2001 can be displayed.

When there is no schedule card 201, the control unit 180 displays only the contact list 2603 on the contact list screen 2601 in operation 2507. Next, the control unit 180 returns to FIG. 3. When not displaying the contact list 2603 in operation 2601, the control unit 180 returns to FIG. 3.

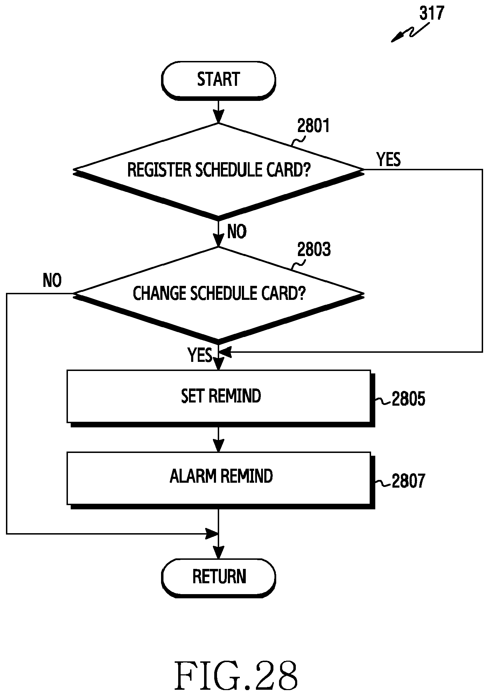

FIG. 28 is a flowchart of a method for executing a corresponding function in FIG. 3 according to various embodiments of the present disclosure.

Referring to FIG. 28, the control unit 180 determines whether the schedule card 201 is registered in operation 2801. That is, the control unit 180 can determine whether a new schedule card 201 is registered.

When the schedule card 201 is registered, the control unit 180 sets the remind function in operation 2805. In so doing, the control unit 180 can determine importance of the schedule and set the remind function according to the importance of the schedule. The importance of the schedule can be determined based on a schedule counterpart, an important schedule check, or details of the schedule card 201. Based on the importance of the schedule, the schedule can be classified into high, medium, low, or level numbers, and the remind function can be set according to the importance.

More specifically, the importance of the schedule can be determined based on whether the schedule counterpart is included in the contact list stored in the storage unit 170 (illustrated in FIG. 1). When the schedule counterpart is included in the contact list stored in the storage unit 170, the control unit 180 (illustrated in FIG. 1) can determine the medium importance and set the remind function corresponding to the medium importance. Alternatively, when the schedule counterpart is not included in the contact list stored in the storage unit 170, the control unit 180 can determine the low importance and set the remind function corresponding to the low importance. Alternatively, when the schedule counterpart is marked as an important counterpart in the contact list stored in the storage unit 170, the control unit 180 can determine the high importance and set the remind function corresponding to the high importance.

The control unit 180 can determine the importance of the schedule based on the importance schedule check. That is, when an importance schedule is marked or registered in the schedule card 201 or the schedule management application, the control unit 180 can determine the high importance and set the remind function corresponding to the high importance.

The control unit 180 can determine the importance of the schedule according to whether the date display area 211, the time display area 213, the title display area 215, and the counterpart display area 217 of the schedule card 201 are filled in. For example, when all of the date display area 211, the time display area 213, the title display area 215, and the counterpart display area 217 of the schedule card 201 are filled in, the control unit 180 can determine the high importance and set the remind function corresponding to the high importance. Alternatively, when all of the date display area 211, the time display area 213, the title display area 215, and the counterpart display area 217 of the schedule card 201 are filled in, the control unit 180 can determine the importance based on a length of the fill-in. Alternatively, the control unit 180 can determine the importance according to whether the fill-in of the date display area 211, the time display area 213, the title display area 215, and the counterpart display area 217 are linked to a homepage or an event.

The remind function can be differentiated using the number of reminds, a remind method, or a remind detail. For example, the number of reminds, a remind interval, or a remind detail can vary according to the importance of the schedule. The number of the reminds can increase as the importance of the schedule rises. Alternatively, the remind interval can be shortened as the importance of the schedule rises. Alternatively, the remind method can vary according to the importance of the schedule. For example, any one of a vibration, a sound, or a melody of a remind alarm can vary according to the importance of the schedule. Alternatively, the remind detail can vary according to the importance of the schedule. For example, when the importance of the schedule is high, the control unit 180 can set to notify all of details stored in the schedule card 201 in the remind. Alternatively, when the importance of the schedule is low, the control unit 180 can set to notify only part of details stored in the schedule card 201.

When the schedule card 201 is not registered, the control unit 180 determines whether the schedule card 201 is changed in operation 2803. That is, the control unit 180 can determine whether the pre-stored schedule card 201 is changed.

When the schedule card 201 is changed, the control unit 180 sets the remind in operation 2805. In so doing, the control unit 180 can determine the importance of the schedule and set the remind function according to the importance of the schedule. When the schedule card 201 is changed and the importance of the schedule is determined, the control unit 180 can further consider the number of changes of the schedule card 201, a change screen, and a change detail. Also, the control unit 180 can set an additional remind function according to the change of the schedule card 201.

More specifically, the control unit 180 can determine the importance of the schedule according to the number of the changes of the schedule card 201. For example, when the schedule card 201 is changed over a certain number of times, the control unit 180 can determine high importance of the schedule and set the remind function corresponding to the high importance.

The control unit 180 can determine the importance of the schedule according to the change screen of the schedule card 201. For example, when the schedule card 201 is changed on the message screen 205, the control unit 180 can determine high importance of the schedule and set the remind function corresponding to the high importance. When the schedule card 201 is changed on an application execution screen excluding the message screen 205, the control unit 180 can determine medium importance of the schedule and set the remind function corresponding to the medium importance. Alternatively, when the schedule card 201 is changed in the schedule management application, the control unit 180 can determine medium importance of the schedule and set the remind function corresponding to the medium importance.

The control unit 180 can determine the importance of the schedule according to the change detail of the schedule card 201. For example, when the schedule date is changed and the changed date advances the original date, the control unit 180 can determine high importance of the schedule and set the remind function corresponding to the high importance.

The control unit 180 can set an additional remind function according to the change of the schedule card 201. For example, according to the change detail of the schedule date, when a schedule title changes, when a schedule place is changed, and when details including the schedule title and the schedule place are changed, the control unit 180 can set an additional remind function in each case.

First, when the schedule date is not changed and the schedule title or the schedule detail is changed, the control unit 180 can set an additional remind function notifying the changed schedule title or schedule detail.

When the schedule date is not changed and the schedule place is changed, the control unit 180 can set the additional remind function. In so doing, when a current location of the electronic apparatus matches the schedule place before a preset time from the registered time of the schedule card 201 on the day of the schedule, the control unit 180 can set an additional remind function notifying the schedule title or the schedule detail, the schedule time, and the schedule counterpart. When the current location of the electronic apparatus is different from the schedule place, the control unit 180 can set an additional remind function to notify the date of the changed schedule place, and a distance and a travel time between the current location and the schedule place.

When the schedule date is not changed and the details including the schedule title and the schedule place are changed, the control unit 180 can set an additional remind function. In so doing, when the current location of the electronic apparatus matches the schedule place before a preset time from the registered time of the schedule card 201 on the day of the schedule, the control unit 180 can set an additional remind function to notify the changed schedule title or schedule detail. When the current location of the electronic apparatus is different from the schedule place, the control unit 180 can set an additional remind function to notify all of information regarding the schedule.

When the schedule date is changed and the changed date advances the original date, the control unit 180 can set an additional remind function. For example, when the schedule title or the schedule detail is changed, the control unit 180 can set an additional remind function to notify the schedule title or schedule detail changed before a preset time from the changed date.

When the changed date advances the original date and the schedule place is changed, the control unit 180 can set an additional remind function. In so doing, when the current location of the electronic apparatus matches the schedule place before a preset time from the changed date, the control unit 180 can set an additional remind function to notify the schedule change. When the current location of the electronic apparatus is different from the schedule place before a preset time from the changed date, the control unit 180 can set an additional remind function to notify the date of the changed schedule place, and the distance and the travel time between the current location and the schedule place. The control unit 180 can differ the number of the reminds by comparing the current location of the electronic apparatus with the schedule place. For example, the control unit 180 can differ the number of the reminds according to a distance difference between the current location of the electronic apparatus with the schedule place.

When the changed date advances the original date and the details including the schedule title and the schedule place are changed, the control unit 180 can set an additional remind function. In the remind before a preset time from the changed date, according to the importance of the schedule, when the current location of the electronic apparatus matches the schedule place, the control unit 180 can reset an additional remind function to notify the changed schedule title or schedule details. In the remind, when the current location of the electronic apparatus is different from the schedule place, the control unit 180 can reset an additional remind function to notify all of information regarding the schedule.

When the schedule date is changed and postponed, the control unit 180 can set an additional remind function. For example, the control unit 180 can set an additional remind function to notify no schedule on the original date before a preset time from the original date according to the importance of the schedule. The control unit 180 can set an additional remind function to notify the changed date on the original date. The control unit 180 can set an additional remind function to notify the changed schedule title or schedule details before a preset time from the original date.

When the schedule date is postponed and the schedule place is changed, the control unit 180 can set an additional remind function. In so doing, when the current location of the electronic apparatus matches the schedule place before a preset time from the changed date, the control unit 180 can set an additional remind function to notify the schedule change. When the current location of the electronic apparatus is different from the schedule place before a preset time from the changed date, the control unit 180 can set an additional remind function to notify the changed place and the schedule change details.

When the schedule date is postponed and the schedule place is changed, in the remind before a preset time from the changed date, when the current location of the electronic apparatus matches the original place, the control unit 180 can set an additional remind function to notify the change of the schedule place. When the current location of the electronic apparatus is different from the original place, the control unit 180 can set an additional remind function to notify the changed place and the changed time. When the current location of the electronic apparatus matches the changed place, the control unit 180 can set an additional remind function to notify the changed time.

When the schedule date is postponed and the details including the schedule title and the schedule place are changed, the control unit 180 can set an additional remind function. When the current location of the electronic apparatus matches the schedule place before a preset time from the changed date, the control unit 180 can set an additional remind function to notify the changed schedule title or schedule details. When the current location of the electronic apparatus is different from the schedule place before the preset time from the changed date, the control unit 180 can reset an additional remind function to notify all of information regarding the schedule.

In operation 2807, as illustrated in FIG. 28, the control unit 180 can execute the set remind alarm. The control unit 180 can execute the remind alarm using a vibration, a sound, a melody, or a message.

As the remind can be set and alarmed automatically according to the schedule registration, the user can easily manage his/her schedule.

The electronic apparatus and its operating method can enable the schedule registration without registering the schedule directly through the schedule management application. That is, when any application is running, the schedule can be easily registered through the schedule card without having to close the ongoing application.

The electronic apparatus and its operating method can input an unformatted date or time into a particular area of the schedule card. That is, the user can input a schedule merely through simple selection. The schedule can be easily input with using a keyboard. Hence, the schedule can be registered easily and quickly.

When the user performs the real-time communication using messages, the electronic apparatus and its operating method can register a schedule through the schedule card without interrupting the communication. That is, during the communication, the schedule can be registered in real time without switching the application to the schedule management application.

The electronic apparatus and its operating method can facilitate the schedule management by sharing the schedule using the counterpart identification information.

The electronic apparatus and its operating method can automatically set and alarm the remind according to the schedule registration. Therefore, the user can easily manage the schedule.

The features, structures, effects, and the like of embodiments of the present disclosure described above may characterize at least one embodiment but they do not limit the scope of the present disclosure itself. It will be apparent to those skilled in the art that the features, structures, effects, and the like of any embodiment may be combined or modified with those of one or more other embodiments without departing from the scope of the present disclosure.

While the present disclosure has been shown and described with reference to various embodiments thereof, it will be understood by those skilled in the art that various changes in form and details may be made therein without departing from the spirit and scope of the disclosure as defined by the appended claims and their equivalents.

Further examples of the present disclosure are set out in the following numbered clauses.
1. A method for displaying a screen, the method comprising:
   displaying a screen comprising a message; and
   displaying a schedule card on the screen based on the message.
2. The method of clause 1, wherein the message comprises date and time information, and wherein the displaying of the schedule card comprises:
   creating the schedule card in response to selecting the date and time information, and
   displaying the date and time information in the schedule card.
3. The method of clause 2, wherein the schedule card comprises at least one of a date display area, a time display area, a title display area, and a counterpart display area.
4. The method of clause 3, wherein the date and time information comprise at least one of date information and time information, and
   wherein the displaying of the date and time information comprises:
   displaying the date information in the date display area, and
   displaying the time information in the time display area.
5. The method of clause 3, wherein the displaying of the schedule card further comprises displaying counterpart identification information of the message in the counterpart display area.
6. The method of clause 3, wherein the message further comprises text information, and wherein the displaying of the schedule card further comprises displaying the text information in the title display area in response to selecting of the text information.
7. The method of clause 3, wherein the displaying of the schedule card further comprises at least one of:
   changing a date of the date display area in response to selecting the date display area; and
   changing a time of the time display area in response to selecting the time display area.
8. The method of clause 1, wherein the displaying of the schedule card comprises, if there is a stored schedule card corresponding to counterpart identification information of the message, displaying the stored schedule card on the screen.
9. The method of clause 8, wherein the displaying of the stored schedule card comprises:
   displaying a schedule tag on the screen, and
   displaying the stored schedule card in response to selecting the schedule tag.
10. The method of clause 8, wherein the message comprises date and time information, and wherein the displaying of the stored schedule card comprises changing date and time information of the schedule card with the selected date and time information in response to selecting the date and time information.
11. An electronic apparatus comprising:
   a display; and
   a processor functionally connected with the display,
   wherein the processor is configured to display a screen including a message and to display a schedule card on the screen based on the message.
12. The electronic apparatus of clause 11, wherein the message comprises date and time information, and wherein the processor is further configured to create the schedule card and display the date and time information in the schedule card in response to selecting of the date and time information.
13. The electronic apparatus of clause 12, wherein the schedule card comprises at least one of a date display area, a time display area, a title display area, and a counterpart display area.
14. The electronic apparatus of clause 12, wherein the date and time information comprises at least one of date information and time information, and wherein, when controlling to display the date and time information, the processor is further configured to display the date information in the date display area and display the time information in the time display area.
15. The electronic apparatus of clause 13, wherein the processor is further configured to change at least one of a date of the date display area in response to selecting the date display area and a time of the time display area in response to selecting the time display area.

## Claims

1. A method for displaying a screen, the method comprising:
displaying, within a user interface of a message application, a schedule card with a message;
in response to receiving at least one input for selecting at least one content associated with a schedule among a plurality of contents included in the message, displaying, within the user interface of the message application, the schedule card including the at least one content as information regarding the schedule, with the message;
receiving an input for storing the schedule card that includes the at least one content; and
in response to the reception of the input, providing information regarding the at least one content to a schedule application to register the schedule in the schedule application.

2. The method of claim 1, further comprising:
displaying the message within the user interface of the message application;
receiving another input for selecting a specified item among included in a plurality of items provided by the user interface of the message application; and
in response to receiving the another input, displaying, within the user interface of the message application, the schedule card with the message.

3. The method of claim 1, further comprising:
displaying, within the user interface of the message application, a tag for calling the schedule card that was previously registered in the electronic device with the message;
receiving another input for selecting the tag; and
in response to receiving the another input, displaying, within the user interface of the message application, the schedule card with the message.

4. The method of claim 1, wherein the at least one content comprises date information of the schedule, time information of the schedule, place information of the schedule, and subject information of the schedule,
wherein displaying the schedule card including the at least one content as the information regarding the schedule with the message comprises:
in response to receiving the at least one input for selecting the at least one information, displaying, within the user interface of the schedule information, the schedule card including the date information, the time information, the place information, and the subject information, with the message.

5. The method of claim 1, further comprising:
receiving another input for selecting the at least one content included in the schedule card; and
in response to receiving the another input, displaying at least one item for changing the at least one content, with the message and the schedule card.

6. The method of claim 1, wherein the user interface of the message application further includes identification information of a counterpart of the message, and
wherein the method further comprises:
after storing the schedule card, displaying, within a user interface of the contacts application, a representation of the schedule card with the identification information of the counterpart.

7. The method of claim 1, further comprising:
displaying, within the user interface of the message application, a tag for calling the schedule card that was previously registered in the electronic device with the message;
receiving another input for selecting the tag; and
in response to receiving the another input, displaying, within the user interface of the message application, the schedule card with the message,
wherein at least another content included in the schedule card is changed to the at least one content by the at least one input.

8. An electronic apparatus comprising:
a memory storing instructions;
a display; and
a processor operatively coupled with the display,
wherein the processor is configured to execute the instructions to:
display, within a user interface of a message application, a schedule card with a message;
in response to receiving at least one input for selecting at least one content associated with a schedule among a plurality of contents included in the message, display, within the user interface of the message application, the schedule card including the at least one content as information regarding the schedule, with the message;
receive an input for storing the schedule card that includes the at least one content; and
in response to the reception of the input, provide information regarding the at least one content to a schedule application to register the schedule in the schedule application.

9. The electronic apparatus of claim 8, wherein the processor is further configured to execute the instructions to:
display the message within the user interface of the message application;
receive another input for selecting a specified item among included in a plurality of items provided by the user interface of the message application; and
in response to receiving the another input, display, within the user interface of the message application, the schedule card with the message.

10. The electronic apparatus of claim 8, wherein the processor is further configured to execute the instructions to:
display, within the user interface of the message application, a tag for calling the schedule card that was previously registered in the electronic device with the message;
receive another input for selecting the tag; and
in response to receiving the another input, display, within the user interface of the message application, the schedule card with the message.

11. The electronic apparatus of claim 8, wherein the at least one content comprises date information of the schedule, time information of the schedule, place information of the schedule, and subject information of the schedule,
wherein the processor is configured to execute the instructions to:
in response to receiving the at least one input for selecting the at least one information, display, within the user interface of the schedule information, the schedule card including the date information, the time information, the place information, and the subject information, with the message.

12. The electronic apparatus of claim 8, wherein the processor is further configured to execute the instructions to:
receive another input for selecting the at least one content included in the schedule card; and
in response to receiving the another input, display at least one item for changing the at least one content, with the message and the schedule card.

13. The electronic apparatus of claim 8, wherein the user interface of the message application further includes identification information of a counterpart of the message, and
wherein the processor is further configured to execute the instructions to:
after storing the schedule card, displaying, within a user interface of the contacts application, a representation of the schedule card with the identification information of the counterpart.

14. The electronic apparatus of claim 13, wherein the representation of the schedule card is used for indicating that the schedule card is stored.

15. The electronic apparatus of claim 8, wherein the processor is further configured to execute the instructions to:
display, within the user interface of the message application, a tag for calling the schedule card that was previously registered in the electronic device with the message;
receive another input for selecting the tag; and
in response to receiving the another input, display, within the user interface of the message application, the schedule card with the message, and
wherein at least another content included in the schedule card is changed to the at least one content by the at least one input.
